(19) **Europäisches Patentamt / European Patent Office / Office européen des brevets**

(11) **EP 0 817 397 B1**

(12) **FASCICULE DE BREVET EUROPEEN**

(45) Date de publication et mention
de la délivrance du brevet:
**31.12.2008 Bulletin 2009/01**

(51) Int Cl.:
*H04B 1/74* (2006.01)       *H04B 7/26* (2006.01)
*H04L 1/22* (2006.01)

(21) Numéro de dépôt: **97401515.8**

(22) Date de dépôt: **30.06.1997**

(54) **Procédé de commutation d'un canal d'un premier chemin de propagation vers un second chemin de propagation**

Verfahren zur Schaltung eines Kanals von einem ersten auf einen zweiten Übertragungsweg

Method for switching a channel from a first to a second propagation path

(84) Etats contractants désignés:
**DE ES GB IT**

(30) Priorité: **04.07.1996 FR 9608339**

(43) Date de publication de la demande:
**07.01.1998 Bulletin 1998/02**

(73) Titulaire: **Alcatel Lucent
75008 Paris (FR)**

(72) Inventeurs:
• **Magnier, Anne
75015 Paris (FR)**
• **Cohen, Michel
75020 Paris (FR)**
• **Rouffet, Denis
92100 Boulogne Billancourt (FR)**
• **Sébastien, Gérald
78340 Les Clayes sous Bois (FR)**

(74) Mandataire: **El Manouni, Josiane et al
Alcatel Lucent
Intellectual Property & Standards
54 rue La Boétie
75008 Paris (FR)**

(56) Documents cités:
EP-A- 0 163 281        EP-A- 0 504 122
EP-A- 0 696 111        DE-A- 4 308 161

**Description**

La présente invention concerne de manière générale un procédé de commutation, à partir d'un premier chemin de propagation vers un second chemin de propagation, d'un canal établi entre une première station et une seconde station.

L'invention s'applique par exemple à un réseau de télécommunications par satellite avec les mobiles fonctionnant en mode dit de diversité commutée, selon lequel une communication établie entre une première station, par exemple une station de base, et une seconde station, par exemple un terminal mobile, peut être émise suivant l'un des deux chemins de propagation respectivement via deux satellites distincts. L'invention peut également s'appliquer à un réseau de radiocommunications terrestre.

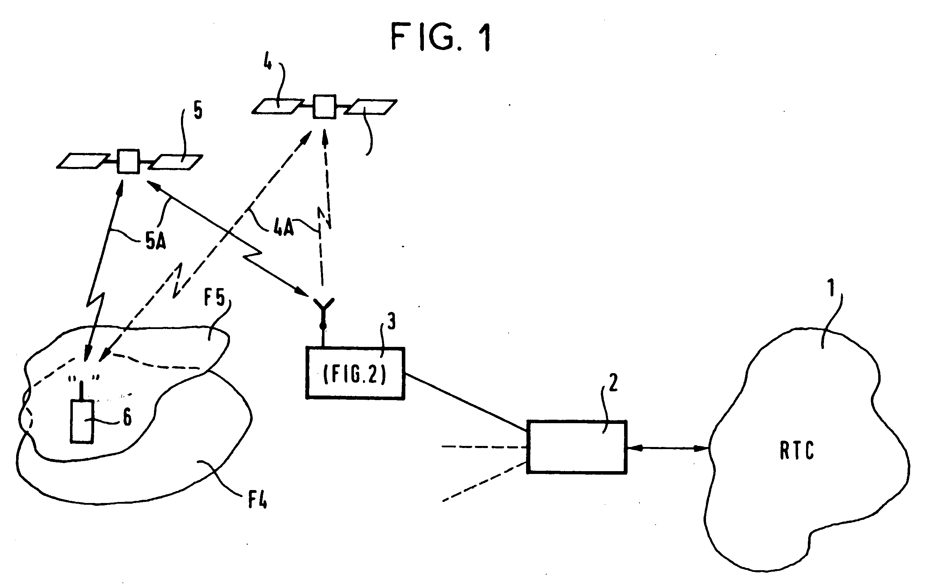

Comme montré dans la figure 1, selon une réalisation, un réseau de télécommunications par satellite mettant en oeuvre l'invention comprend, d'une part, des unités de commutation et de contrôle de stations de base 2 raccordées à travers des liaisons MIC au Réseau Téléphonique Commuté RTC, et, d'autre part, des stations de base a accès multiple 3 connectées par grappe auxdites unités. Les unités 2 sont chargées de l'acheminement des communications en provenance de et vers les terminaux mobiles 6 dans une zone géographique donnée, et du pilotage d'une ou plusieurs stations de base 3. Les stations de base 3 assurent notamment l'émission/réception radio des communications vers/en provenance des terminaux mobiles 6.

Dans un réseau de télécommunications par satellite dit à diversité commutée, une communication, ou canal, établie avec un terminal mobile 6 est véhiculée sélectivement suivant l'un d'au moins deux chemins de propagation 4A et 5A. La sélection de l'un de ces chemins de propagation résulte d'une minimisation de la puissance satellite émise pour la communication considérée. Ainsi, la communication établie avec le terminal mobile 6 est commutée vers celui des deux chemins de propagation, 4A ou 5A, respectivement associés aux deux satellites 4 et 5, qui offre une puissance satellite émise minimale pour une qualité de transmission donnée. Les deux chemins de propagation définissent entre eux, vu du terminal, une différence de marche temporelle, égale à l'écart temporel entre des instants de réception respectifs de données émises en synchronisme suivant les deux chemins de propagation 4A et 5A. En conséquence, cette procédure de commutation de chemin de propagation doit être associée à une procédure de synchronisation du terminal.

Selon la technique antérieure, les Recommandations G.S.M (Global System for Mobile communications) de l'ETSI définissent une procédure de changement de cellule telle que suit. Un terminal envoie sur un canal, noté SACCH, les niveaux de réception de canaux BCCH respectivement émis par la station de base courante avec laquelle est établi le canal de communication et les stations de base voisines. En fonction de ces différents niveaux de puissance, l'infrastructure prend la décision de commuter la communication de la station de base courante vers une station de base suivante. La station de base courante émet alors à destination du terminal un message de demande de changement de cellule, ou handover. En réponse, le terminal émet à destination de la station de base suivante un message de demande d'accès immédiatement après réception d'un message reçu dans un canal BCCH en provenance de cette station de base suivante. La station de base suivante mesure alors, en réponse à la réception de ce message d'accès, un délai de propagation entre elle-même et le terminal mobile, et émet à destination du terminal une information relative à une avance temporelle que le terminal doit appliquer à son horloge par rapport à ce qu'il croit être l'horloge de la station suivante, de sorte que les données de la communication émises par le terminal soient reçues par la station de base suivante synchronisées temporellement dans un intervalle temporel d'une trame reçue par cette dernière compte tenu de la distance entre station de base suivante et terminal.

Le document EP A 0 504 122 décrit un changement de cellule assisté par les cellules voisines dans un système de communication cellulaire.

Dans un réseau par satellite, cette solution de la technique antérieure s'avère peu performante. En effet, dans un tel réseau, la faible marge de puissance allouée à chaque communication, en vue de garantir une qualité de communication minimale, conduit à une dégradation rapide de la communication en présence par exemple d'un obstacle. Ce caractère rapide de la dégradation des canaux s'applique également aux canaux de contrôle. Cela peut alors conduire à une impossibilité de réception par le terminal d'un message de demande de commutation d'un canal d'un premier chemin de propagation vers un second chemin de propagation, et par voie de conséquence à une perte de la communication.

L'invention vise à remédier à cet inconvénient en fournissant un procédé de commutation de chemin de propagation particulièrement avantageux, par exemple dans le cadre d'un réseau par satellite.

A cette fin, un procédé de commutation, à partir d'un chemin de propagation courant vers un chemin de propagation suivant, d'une communication établie entre une première station et une seconde station, procédé comprenant les étapes de:

- mesure d'une valeur représentative de rapport signal à bruit pour chacun desdits chemins de propagation courant et suivant,
- commutation, par la première station, de la communication à partir d'un canal courant selon le chemin de propagation courant vers un canal suivant selon un chemin de propagation suivant, en fonction de valeurs représentatives de rapport signal à bruit respectivement mesurées pour lesdits chemins de propagation courant et suivant,

est caractérisé selon l'invention en ce que:

- ledit canal de communication suivant est réservé pour ladite communication, et par l'étape de
- commutation, dans ladite seconde station, de ladite communication à partir du canal courant vers ledit canal suivant en réponse à un défaut de réception de ladite communication dans le canal courant.

Dans le cas d'un mode de transmission entre première et seconde stations utilisant le TDMA, le procédé comprend une étape de calcul dans la seconde station d'une différence de marche temporelle totale entre le canal courant et le canal suivant en fonction, d'une part, (a) - d'une différence de marche temporelle entre deux instants de réception respectifs de paquets de contrôle émis par la première station respectivement suivant les deux chemins de propagation et, d'autre part, (b) - d'une avance temporelle qui est fonction de la distance entre ladite seconde station et ladite première station.

Une première station pour la mise en oeuvre du procédé de l'invention comprend des moyens pour allouer des moyens d'émission et de réception au canal courant, et est caractérisée en ce qu'elle comprend des moyens) pour réserver des moyens d'émission et de réception au canal suivant.

Une seconde station pour la mise en oeuvre du procédé est caractérisée en ce qu'elle comprend des moyens pour détecter un défaut de réception d'informations dans le canal courant, et des moyens pour commuter, en émission et réception, ladite communication vers ledit canal suivant en réponse à une détection, par lesdits moyens pour détecter, d'un défaut de réception d'informations dans ledit canal courant.

D'autres caractéristiques et avantages de la présente invention apparaîtront plus clairement à la lecture de la description suivante, en référence aux dessins annexés correspondants, dans lesquels :

- la figure 1 représente, sous forme schématique, un réseau de télécommunications avec des terminaux mobiles mettant en oeuvre l'invention;
- la figure 2 est un bloc-diagramme général d'une station de base formant partie du réseau de la figure 1;
- la figure 3 est un bloc-diagramme d'une unité d'émission incluse dans la station de base de la figure 2;
- les figures 4 est un bloc-diagramme d'une unité de réception incluse dans la station de base de la figure 2;
- la figure 5 représente sous forme schématique une forme d'onde émise par la station de base;
- la figure 6 est un bloc-diagramme d'un terminal pour la mise en oeuvre de l'invention; et
- la figure 7 est un algorithme de fonctionnement de ce terminal.

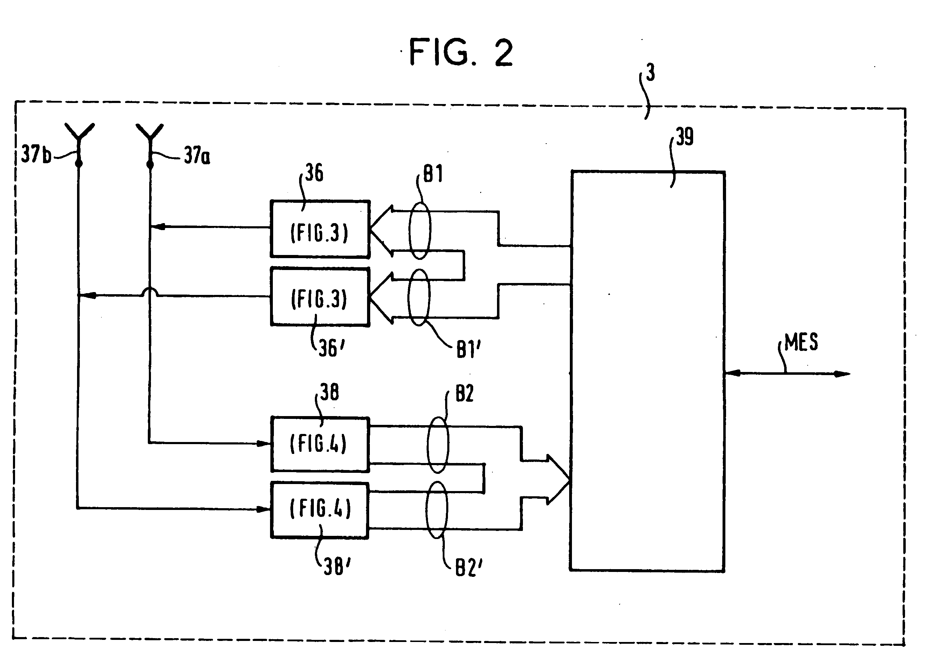

Selon la réalisation décrite à titre non limitatif, l'invention utilise une technique combinée de transmission à Accès Multiple à Répartition de Code, dite AMRC ou CDMA (Code Division Multiple Access) et Accès Multiple à Répartition dans le Temps, dite AMRT ou TDMA (Time Division Multiple Access). En référence aux figures 1 et 2, une station de base 3 mettant en oeuvre l'invention comprend une unité centrale 39, deux chaînes d'émission 36 et 36', deux chaînes de réception 38 et 38'. Une sortie de la chaîne d'émission 36 et une entrée de la chaîne de réception 38 sont couplées à une première antenne 37a pointant vers le satellite 4. Une sortie de la chaîne d'émission 36' et une entrée de la chaîne de réception 38' sont couplées à une seconde antenne 37b pointant vers le satellite 5. Comme cela sera décrit plus en détail ultérieurement, l'unité centrale 39, outre une fonction d'interface avec l'unité de commutation et de contrôle de station de base 2, assure des fonctions d'aiguillage de canaux, de calcul d'avance temporelle et de commutation de canal entre chemins de propagation 4A et 5A. Cette unité centrale est reliée à la chaîne d'émission 36 à travers un bus d'émission B1, à la chaîne d'émission 36' à travers un bus d'émission BI', à la chaîne de réception 38 à travers un bus de réception B2 et à la chaîne de réception 38' à travers un bus de réception B2'.

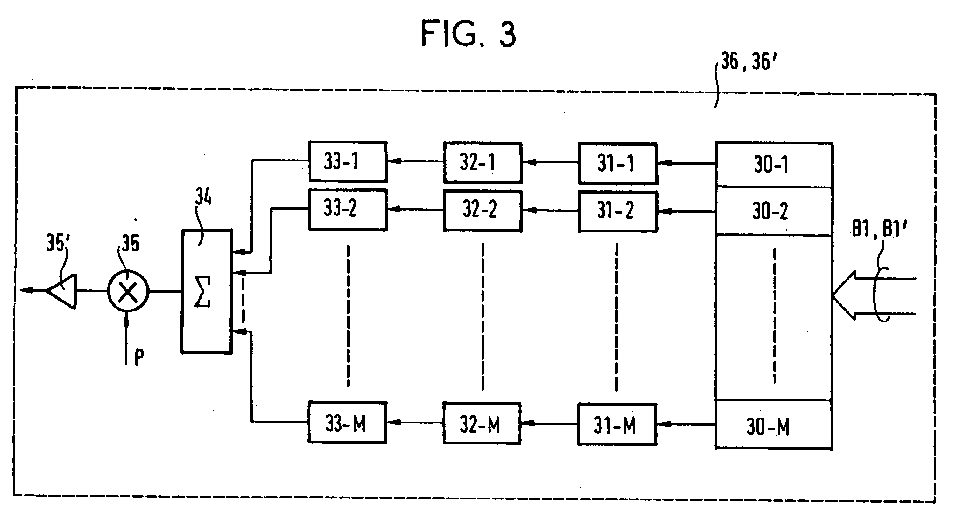

Comme montré dans la figure 3, chaque chaîne d'émission 36, 36' comprend M files d'attente d'émission 30-1 à 30-M dont des sorties respectives sont appliquées à des entrées de M unités d'entrelacement et de codage 31-1 à 31-M. Des sorties respectives de ces M unités d'entrelacement et de codage 31-1 à 31-M sont appliquées à des entrées de M unités de modulation QPSK 32-1 à 32-M. Des sorties respectives de ces M unités de modulation QPSK 32-1 à 32-M sont appliquées à des entrées respectives de M unités de modulation par code PN/Hadamard 33-1 à 33-M. Les sorties de ces M unités de modulation par code PN/Hadamard 33-1 à 33-M sont appliqués à une entrée d'un additionneur 34 dont une sortie est appliquée à une entrée d'un multiplieur 35, une sortie de ce dernier étant reliée à une entrée d'un amplificateur 35'.

L'homme du métier pourra se reporter utilement au brevet US-A-5 103 459, inclus par référence dans la présente demande, pour compléter la description qui suit du fonctionnement de chaque chaîne d'émission 36 et 36'.

Chaque unité d'entrelacement et de codage 31-1 à 31-M comprend un circuit d'entrelacement et un codeur convolutionnel, par exemple de type Viterbi de longueur de contrainte $K=7$ et de rapport $r = 1/2$. Ce codeur a pour fonction de mettre en oeuvre un codage qui offre une garantie de la qualité de la liaison. Un tel circuit de codage est bien connu de l'homme de l'art. Pour m compris entre 1 et M, les paquets de données en bande de base issus d'une file d'attente 30-m sont codés puis entrelacés par l'unité 31-m. Le signal résultant entrelacé est modulé en phase QPSK (Quadrature Phase Shift Keying) par l'unité 32-m. Cette dernière 32-m produit deux composantes de signal, respectivement en phase et en quadrature, qui sont chacune appliquée à un modulateur par code 33-m.

Dans la réalisation décrite ici, le fonctionnement du réseau est tel que tous les signaux émis à l'intérieur d'une cellule (réseau terrestre) ou d'un faisceau (réseau par satellite) utilisent une même séquence PN (Pseudo-Noise) qui est différente d'une séquence PN utilisée par une cellule, ou faisceau, voisin(e). A l'intérieur d'une cellule, un signal à destination d'une station, tel que terminal, particulière est, en outre, codé par une séquence particulière parmi une pluralité de séquences orthogonales.

Typiquement, les séquences PN consistent en des séquences pseudo-aléatoires identiques qui sont décalées temporellement entr'elles pour des cellules distinctes. Les séquences orthogonales sont par exemple des fonctions de Walsh, également connues sous les termes de "séquences de Hadamard".

Les séquences de Hadamard sont obtenues à partir d'une matrice de Hadamard de rang M, M étant une puissance de 2, telle que:

$$H(M) = \begin{pmatrix} H(M/2) & H(M/2) \\ H(M/2) & -H(M/2) \end{pmatrix},$$

avec

$$H(2) = \begin{pmatrix} 1 & 1 \\ 1 & -1 \end{pmatrix}$$

Une séquence de Hadamard Hm, m compris entre 1 et M, est l'une respective des lignes M de la matrice de Hadamard. Une matrice de Hadamard de rang M contient donc M séquences, chacune ayant une longueur de M bits. Les séquences de Hadamard d'ordre M possèdent la propriété que sur un intervalle de M symboles, la corrélation entre les différentes séquences est nulle, étant entendu que ces différentes séquences sont alignées temporellement. Cela résulte du fait que chaque séquence diffère de toute autre séquence pour la moitié des bits qui la composent.

En revenant à la figure 3, dans l'unité de modulation par code 33-m, m compris entre 1 et M, les deux composantes de signal modulé QPSK en quadrature sont toutes deux multipliées par une séquence de Hadamard Hm de rang m et par une séquence PN associée au faisceau F4, F5, pour produire deux signaux en quadrature modulés par code. Les différents signaux en quadrature issus des différentes unités de modulation par code 33-1 à 33-M sont additionnés au moyen de l'additionneur 34. Au moyen du multiplieur 35, le signal d'addition résultant est modulé par une porteuse d'émission P avant d'être amplifié par l'amplificateur 35' pour être émis à travers l'antenne 37a, 37b.

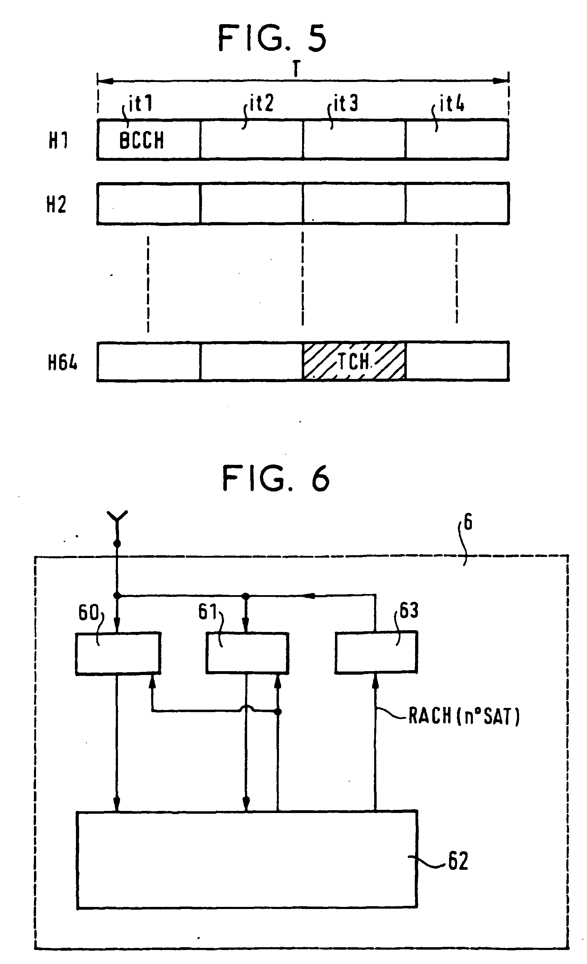

Ce signal d'addition, ou signal composite, émis à travers l'antenne 37a, 37b est tel que représenté dans la figure 5. Il utilise par exemple un motif élémentaire de trame à quatre intervalles temporels itl-it4 qui se répète à la fréquence de trame. Le signal d'addition comprend M signaux de trame, chaque signal de trame donné étant associé à une séquence de Hadamard respective Hm, m étant par exemple compris entre 1 et M=64 pour une matrice de Hadamard de rang M=64. Un canal de communication TCH établi dans le réseau décrit ici est défini par un intervalle temporel itj, j compris entre 1 et 4, une séquence de Hadamard Hm, et un code PN.

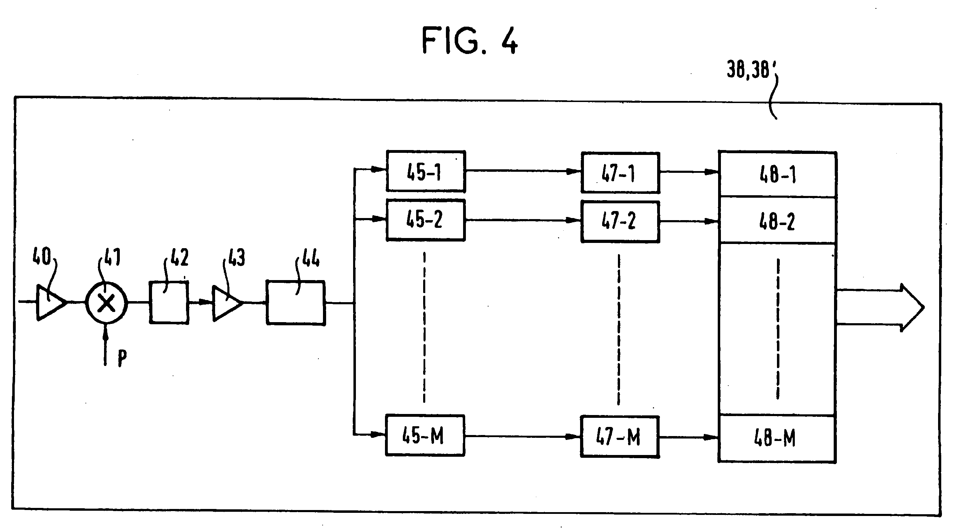

En référence à la figure 4, chaque chaîne de réception 38, 38' comprend un amplificateur RF 40, un multiplieur 41, un filtre 42, un amplificateur IF 43, un convertisseur analogique/numérique 44 dont une sortie s'applique à des entrées respectives des M unités de démodulation par code 45-1 à 45-M. M unités de décodage et désentrelacement 47-1 à 47-M reçoivent sur des entrées respectives les sorties des M unités de démodulation par code 45-1 à 45-M, et M files d'attente 48-1 à 48-M reçoivent en entrée les sorties respectives des M unités de décodage et désentrelacement 47-1 à 47-M.

L'homme du métier pourra se reporter utilement au brevet US-A-5 103 459 précité pour compléter la description qui suit du fonctionnement de chaque chaîne d'émission 36 et 36'. Des signaux émis par les différents mobiles 6 d'une cellule, ou faisceau sont reçus sous la forme de signaux de trame tels que montrés dans la figure 5. Il est préalablement souligné que les mobiles sont synchronisés en émission selon la procédure de réglage de l'instant d'émission, dite du "timing advance" en G.S.M. Pour cela, avant établissement d'une communication, un terminal mobile 6 déclenche une émission sur un canal RACH relativement à la synchronisation qu'il a reçue de la station de base 3. Cette émission permet à la station de base de mesurer le double du temps de propagation terminal-station de base. En réponse, la station de base alloue au terminal un canal SACCH dans lequel est véhiculée une information d'avance temporelle que ledit terminal doit donner à son horloge par rapport à ce qu'il croit être l'horloge de la station de base, de sorte que les données ultérieurement émises par le terminal coïncident avec un intervalle temporel donné de la trame. L'information d'avance temporelle devra dans notre réalisation posséder une précision bien supérieure à celle du G.S.M, pour tenir compte de la modulation CDMA. Un nombre de bits supérieur à ceux définis à cette fin dans le GSM sera donc utilisé dans le SACCH.

La station de base 3 reçoit donc les différents canaux sur des intervalles temporels parfaitement synchronisés, et modulées par des séquences de Hadamard, tel que cela est montré dans la figure 5 illustrant M signaux de trame relatifs à un faisceau ou une cellule.

Comme montré dans la figure 4, ces différents signaux sont successivement amplifiés RF par l'amplificateur 40, démodulés dans le multiplieur 41 par une porteuse de démodulation P produite par un générateur (non représenté), filtrés passe-bande par le filtre 42, amplifiés IF 43, et subissent une conversion analogique/numérique 44. Le signal composite issu du convertisseur analogique/numérique 44 est appliqué aux entrées respectives des M unités de démodulation par code 33-1 à 33-M. Chaque unité de démodulation par code 45-m, m compris entre 1 et M, comprend en cascade un corrélateur QPSK/PN et une transformée de Hadamard rapide. Un signal issu d'une unité de démodulation par code est appliqué à l'une respective des unités de décodage et de désentrelacement 47-m. En sortie de chaque unité de décodage et de désentrelacement 47-m, est produit le signal en bande de base correspondant aux trames "portées" par l'une respective des séquences de Hadamard Hm, m compris entre 1 et M=64. Le signal en bande de base issu de chaque unité de décodage et de désentrelacement 47-m est appliqué dans une file d'attente respective 48-1 pour être lu et acheminé, par l'unité centrale 39, vers une unité de commutation et de contrôle de stations de base 2.

En référence aux figures 1, 5, 6 et 7, il va maintenant être décrit en détail le procédé de l'invention. Il est supposé, selon la réalisation donnée à titre d'exemple, que chaque terminal opère selon un mode de duplexage temporel. Il en résulte que sur une durée de trame T, est fournie, vu du terminal, une fenêtre de réception correspondant à un intervalle temporel it1 à it4, et une fenêtre d'émission séparée temporellement de la fenêtre de réception, ces deux fenêtres occupant ensemble une durée inférieure à une durée de trame T. Comme montré dans la figure 1, les deux satellites 4 et 5 définissent deux zones de couverture, ou faisceaux, respectifs F4 et F5 définis par deux codes PN différents. Les chaînes d'émission 36 et de réception 38 sont associées à la zone de couverture F4 tandis que les chaînes d'émission 36' et de réception 38' sont associées à la zone de couverture F5. Un terminal donné 6 se trouve à la fois dans la zone de couverture F4 du satellite 4 et dans la zone de couverture F5 du satellite 5. Chaque chaîne d'émission 36 et 36' dans la station de base 3 émet continûment, à la fréquence de trame, dans un intervalle temporel donné, ici it1, de l'un des M signaux de trame associé à une séquence de Hadamard respective, ici H1, un canal de contrôle dit de diffusion d'informations générales BCCH.

Le terminal, ou seconde station, 6 comprend deux unités de démodulation par code 60 et 61, une unité de modulation par code 63 et une unité centrale 62.

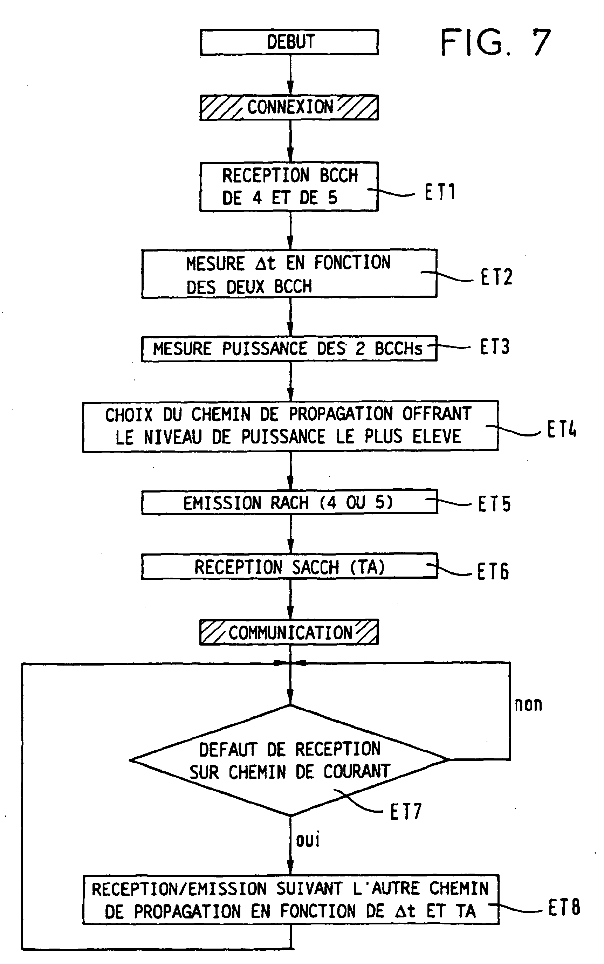

Les deux unités de démodulation par code 60 et 61 reçoivent à travers l'antenne du terminal 6, les signaux composites respectivement émis par les deux chaînes d'émission 36 et 36' dans la station de base 3 (FIG.7, ET1). Dans le terminal 6, lors de son initialisation, l'unité de démodulation 60 acquiert la synchronisation de codes PN et Hadamard relative au signal de trame portant le canal BCCH émis par la chaîne d'émission 36 de la station de base 3. Parallèlement, l'unité de démodulation 61 acquiert la synchronisation de codes PN et Hadamard relative au signal de trame portant le canal BCCH émis par la chaîne d'émission 36' de la station de base 3. En sortie de ces deux unités de démodulation par code 60 et 61, sont donc respectivement produits les deux signaux de canal BCCH en bande de base reçus via les satellites 4 et 5. Ces deux signaux de canal BCCH sont appliqués à l'unité centrale 62. Cette dernière mesure périodiquement une valeur représentative d'un rapport signal à bruit, par exemple un niveau de puissance ou un taux d'erreur binaire, pour chacun de ces deux signaux de canal BCCH respectivement reçus suivant les deux chemins de propagation 4A et 5A (FIG.7, ET3).

En outre, l'unité centrale 62 mesure une différence de marche temporelle Δt entre ces deux canaux BCCH qui sont émis en synchronisme suivant les deux chemins de propagation 4A et 5A, respectivement par les chaînes d'émission 36 et 36' dans la station de base 3 (FIG.7, ET2). En pratique, cette différence de marche temporelle Δt pouvant prendre une durée supérieure à une durée de trame, il est prévu qu'un canal BCCH véhicule, tel que cela est prévu pour d'autres raisons dans les Recommandations GSM, une information de rang de trame. Ainsi, l'unité centrale 62 mesure une différence de marche temporelle Δt entre les deux canaux BCCH en additionnant une différence de marche temporelle apparente et une différence de marche temporelle égale à la différence des rangs de trame dans les deux canaux BCCH multipliée par la durée de trame T.

Pour l'établissement d'une communication, qu'elle soit sortante ou entrante, le terminal émet dans un canal dit RACH, un message de demande d'accès (FIG.7, ET5) à travers l'unité de modulation par code 63. Ce message est émis immédiatement après réception d'un signal de canal BCCH. Dans le cas d'une communication entrante, cette émission d'un message de demande d'accès par le terminal est précédée par la réception par ce dernier d'un message d'appel entrant dans les deux canaux BCCH des deux signaux composites reçus respectivement via les deux chemins de propagation. Dans le message de demande d'accès RACH est incluse une information identifiant celui des chemins de propagation 4A, 5A qui offre une valeur représentative de rapport signal à bruit la plus élevée. Ce chemin de propagation est identifié en résultat de la mesure périodique par l'unité centrale 62 d'une valeur représentative d'un rapport signal à bruit pour chacun de ces deux signaux de canal BCCH respectivement reçus suivant les deux chemins de propagation 4A et 5A. Le message de demande d'accès RACH est émis sur la voie retour du chemin de propagation offrant une valeur représentative de rapport signal à bruit la plus élevée (FIG.7, ET4).

Comme cela est réalisée dans le GSM, sur réception de ce message de demande d'accès en provenance du terminal, la station de base 3 mesure le double du temps de propagation terminal-station de base. En réponse, la station de base alloue au mobile un canal SACCH (FIG.7, ET6) dans lequel est véhiculée une information d'avance temporelle TA que le mobile doit donner à son horloge par rapport à ce qu'il croit être l'horloge de la station de base, de sorte que les données ultérieurement émises par le mobile coïncident avec un intervalle temporel itl à it4 donné d'un signal de trame reçu par la station de base 3. Cette avance temporelle est fonction de la distance entre le terminal et la station de base. Parallèlement à cela, via un canal dit AGCH, la station de base 3 alloue au terminal 6 un canal de communication TCH sous la forme d'un rang d'intervalle temporel itl à it4 et d'une séquence de Hadamard H1 à H64, le terminal ayant déjà acquis par synchronisation de code PN.

Une communication dans un canal TCH, dit courant, est alors établie entre le terminal 6 et la station de base 3. Ce canal est par exemple établi suivant le chemin de propagation 4A et recourt dans la station de base 3 aux unité d'émission 36 et unité de réception 38. Selon une caractéristique importante de l'invention, lors de l'établissement de la communication, un canal TCH associé, non immédiatement utilisé, est réservé au terminal 6 pour le chemin de propagation 5A, ce canal utilisant les unité d'émission 36' et unité de réception 38' dans la station de base 3. Pour cela, des ressources utiles à l'émission et la réception du canal associé TCH sont réservées dans les unités 36' et 38' par l'unité 39. Des informations nécessaires à l'identification de ce canal TCH associé sont transmises de la station 3 vers le terminal 6.

Durant la communication, initialement établie suivant le chemin de propagation 4A, le terminal émet périodiquement dans le canal SACCH les valeurs représentatives de rapport signal à bruit qui sont périodiquement mesurées par l'unité centrale 63 pour chacun de ces deux signaux de canal BCCH respectivement reçus suivant les deux chemins de propagation 4A et 5A. En fonction de ces valeurs, la station de base prend la décision de commuter le canal de communication courant véhiculée dans le canal TCH courant vers le canal TCH associé, ou canal suivant. Cette commutation est réalisée sans en informer le terminal 6. Dans ce dernier, l'unité centrale 62 détectant un défaut de réception d'informations dans le canal TCH courant qui est alloué au terminal 6, prend alors l'initiative de basculer, ou commuter, en émission et réception sur le canal TCH associé (FIG. 7, ET7). Il modifie en conséquence la programmation des codes PN, et éventuellement séquence de Hadamard et intervalle temporel dans les unité de réception 60 ou 61 et unité d'émission 63. Ce basculement du canal courant vers le canal associé suivant conduit dans le terminal 6 à une resynchronisation en résultat de la différence de marche temporelle existant entre les deux chemins de propagation 5A et 5B. Cette resynchronisation est réalisée par le terminal en fonction des informations d'avance temporelle TA et de différence de marche temporelle $\Delta t$ mémorisées dans l'unité centrale 62. Il additionne pour cela ces deux informations exprimées en valeur algébrique pour en déduire une différence de marche temporelle totale (FIG.7, ET8). Le canal suivant devient alors un canal courant et le canal courant devient un canal suivant.

L'invention n'est pas limitée à la réalisation décrite et peut être étendue à tous types de réseaux de télécommunications.

## Revendications

1. Procédé de commutation, à partir d'un chemin de propagation courant (4A) vers un chemin de propagation suivant (5A), d'une communication établie entre une première station (3) et une seconde station (6), ledit procédé comprenant les étapes de:

   - mesure d'une valeur représentative de rapport signal à bruit pour chacun desdits chemins de propagation courant et suivant,
   - commutation, par la première station (3), de la communication à partir d'un canal courant selon le chemin de propagation courant (4A) vers un canal suivant selon un chemin de propagation suivant (5A), en fonction de valeurs représentatives de rapport signal à bruit respectivement mesurées pour lesdits chemins de propagation courant et suivant,

   **caractérisé en ce que**:

   - ledit canal de communication suivant est réservé pour ladite communication, et par l'étape de
   - commutation, dans ladite seconde station (3), de ladite communication à partir du canal courant vers ledit canal suivant en réponse à un défaut de réception de ladite communication dans le canal courant.

2. Procédé conforme à la revendication 1, **caractérisé par** un mode d'émission/réception de canaux de type TDMA, et par l'étape de calcul dans la seconde station (6) d'une différence de marche temporelle totale entre ledit canal courant et ledit canal suivant en fonction, d'une part, (a) - d'une différence de marche temporelle ($\Delta t$) entre deux instants de réception respectifs de paquets de contrôle émis par la première station (3) respectivement suivant les deux chemins de propagation (4A, 5A) et, d'autre part, (b) - d'une avance temporelle (TA) qui est fonction de la distance entre ladite seconde station et ladite première station.

3. Première station pour la mise en oeuvre du procédé conforme à la revendication 1 ou 2, comprenant des moyens pour allouer des moyens d'émission et de réception (36, 38) au canal courant, **caractérisée en ce qu'**elle comprend des moyens (39) pour réserver des moyens d'émission et de réception (36', 38') au canal suivant.

4. Seconde station pour la mise en oeuvre du procédé conforme à la revendication 1, **caractérisée en ce qu'**elle comprend des moyens pour détecter un défaut de réception d'informations dans ledit canal courant, et des moyens pour commuter, en émission et réception, ladite communication vers ledit canal suivant en réponse à une détection, par lesdits moyens pour détecter, d'un défaut de réception d'informations dans ledit canal courant.

**5.** Seconde station conforme à la revendication 4, pour la mise en oeuvre du procédé conforme à la revendication 2, **caractérisée en ce qu'**elle comprend , en outre, des moyens pour calculer une différence de marche temporelle totale entre ledit canal courant et ledit canal suivant en fonction, d'une part, (a) - d'une différence de marche temporelle entre deux instants de réception respectifs de paquets de contrôle émis par la première station (3) respectivement suivant les deux chemins de propagation (4A, 5A) et, d'autre part, (b) - d'une avance temporelle (TA) qui est fonction de la distance entre ladite seconde station et ladite première station.

**Claims**

**1.** A switching method, from a current propagation path (4A) to a following propagation path (5A), for a communication established between a first station (3) and a second station (6), said method comprising the steps of:

- measuring a value representative of the signal-to-noise ratio for each of said current and following propagation paths,
- the first station (3) switching the communication from a current channel along the current propagation path (4A) to a channel along a following propagation path (5A), based on values representative of the signal-to-noise ratios respectively measured for said current and following propagation paths,

**characterized in that**:

- said following communication channel is reserved for said communication, and by the step of
- switching, within said first station (3), said communication from the current channel to said following channel in response to a failure in receiving said communication within the current channel.

**2.** A method in accordance with claim 1, **characterized by** a TDMA channel sending/receiving mode, and by the step of calculating, within a second station (6), a difference in total transport time between said current channel and said following channel based firstly on (a) a difference in time ($\Delta t$) between two respective moments when control packets send by the first station (3) are received, said packets respectively following the two propagation paths (4A,5A), and based secondly on (b) an head-start time (AT) based on the distance between said second station and said first station.

**3.** A first station for implementing the method according to claim 1 or 2, comprising means for allocating sending and receiving means (36, 38) to the current channel, said first station being **characterized in that** it comprises means (39) for reserving sending and receiving means (36', 38') to the following channel.

**4.** A second station for implementing the method according to claim 1, **characterized in that** it comprises means for detecting a failure in receiving information within said current channel, and means for switching, both when sending and receiving, said communication to said following channel in response to detecting, by said means for detecting, a failure in receiving information within said current channel.

**5.** A second station in accordance with claim 4, for implementing the method according to claim 2, **characterized in that** it further comprises means for calculating a difference in total travel time between said current channel and said following channel based firstly on (a) a difference in time between two respective moments when control packets send by the first station (3) are received, said packets respectively following the two propagation paths (4A, 5A), and based secondly on (b) an head-start time (AT) based on the distance between said second station and said first station.

**Patentansprüche**

**1.** Verfahren zur Schaltung einer zwischen einer ersten Station (3) und einer zweiten Station (6) aufgebauten Verbindung von einem aktuellen Übertragungsweg (4A) auf einen folgenden Übertragungsweg (5A), wobei das besagte Verfahren die folgenden Schritte umfasst:

- Messen eines für den Signal-Rausch-Abstand repräsentativen Wertes für einen jeden der besagten aktuellen und folgenden Übertragungswege,
- Schalten, durch die erste Station (3), der Verbindung von einem aktuellen Kanal entsprechend dem aktuellen Übertragungsweg (4A) auf einen folgenden Kanal entsprechend einem folgenden Übertragungsweg (5A), gemäß den für den Signal-Rausch-Abstand repräsentativen Werten, welche jeweils für den besagten aktuellen Übertragungsweg und den besagten folgenden Übertragungsweg gemessen wurden,

**dadurch gekennzeichnet:**

- **dass** der besagte folgende Kommunikationskanal für die besagte Verbindung reserviert ist, und durch den Schritt des
- Schaltens, in der besagten zweiten Station (3), der besagten Verbindung von dem aktuellen Kanal auf den folgenden Kanal im Anschluss an einen Empfangsfehler der Verbindung in dem aktuellen Kanal.

2. Verfahren nach Anspruch 1, **gekennzeichnet durch** einen Sende-/Empfangsmodus von Kanälen vom Typ TDMA, und **durch** den Schritt des Berechnens, in der zweiten Station (6), einer Gesamt-Time-Walk-Differenz zwischen dem besagten aktuellen Kanal und dem besagten folgenden Kanal in Abhängigkeit von einerseits, (a) - einer Time-Walk-Differenz ($\Delta$t) zwischen zwei jeweiligen Empfangsmomenten von von der ersten Station (3) ausgegeben Kontrollpaketen, welche jeweils den zwei Übertragungswegen (4A, 5A) folgen, und andererseits, (b) - eines Zeitfortschritts (TA), welcher von der Entfernung zwischen der besagten zweiten Station und der besagten ersten Station abhängt.

3. Erste Station zum Ausführen des Verfahrens nach Anspruch 1 oder 2, mit Mitteln für die Zuteilung von Sende- und Empfangsmitteln (36, 38) an den aktuellen Kanal, **dadurch gekennzeichnet, dass** sie Mittel (39) für das Reservieren von Sende- und Empfangsmitteln (36', 38') für den folgenden Kanal umfasst.

4. Zweite Station zum Ausführen des Verfahrens nach Anspruch 1, **dadurch gekennzeichnet, dass** Mittel für die Detektion eines Informationsempfangsfehlers im aktuellen Kanal umfasst, sowie Mittel zum Schalten, im Sende- und im Empfangsmodus, der besagten Verbindung an den folgenden Kanal im Anschluß an die Detektion, durch die besagten Detektionsmittel, eines Informationsempfangsfehlers in dem besagten aktuellen Kanal.

5. Zweite Station nach Anspruch 4 zum Ausführen des Verfahrens nach Anspruch 2, **dadurch gekennzeichnet, dass** sie weiterhin Mittel zum Berechnen, einer Gesamt-Time-Walk-Differenz zwischen dem besagten aktuellen Kanal und dem besagten folgenden Kanal in Abhängigkeit von einerseits (a) - einer Time-Walk-Differenz zwischen zwei jeweiligen Empfangsmomenten von von der ersten Station (3) ausgegeben Kontrollpaketen, welche jeweils den zwei Übertragungswegen (4A, 5A) folgen, und andererseits, (b) - eines Zeitfortschritts (TA), welcher von der Entfernung zwischen der besagten zweiten Station und der besagten ersten Station abhängt.

FIG. 1

EP 0 817 397 B1

# FIG. 2

EP 0 817 397 B1

# FIG. 3

EP 0 817 397 B1

FIG. 4

# FIG. 5

# FIG. 6

RACH (n°SAT)

# FIG. 7

```
┌─────────────────────┐
│        DEBUT        │
└─────────────────────┘
           │
           ▼
┌─────────────────────┐
│//// CONNEXION ///////│
└─────────────────────┘
           │
           ▼
┌─────────────────────┐
│   RECEPTION BCCH    │──── ET1
│   DE 4 ET DE 5      │
└─────────────────────┘
           │
           ▼
┌─────────────────────┐
│ MESURE Δt EN FONCTION│──── ET2
│   DES DEUX BCCH     │
└─────────────────────┘
           │
           ▼
┌───────────────────────────┐
│ MESURE PUISSANCE DES 2 BCCHs│──── ET3
└───────────────────────────┘
           │
           ▼
┌─────────────────────────────────────┐
│ CHOIX DU CHEMIN DE PROPAGATION OFFRANT│──── ET4
│ LE NIVEAU DE PUISSANCE LE PLUS ELEVE │
└─────────────────────────────────────┘
           │
           ▼
┌─────────────────────────┐
│   EMISSION RACH (4 OU 5)│──── ET5
└─────────────────────────┘
           │
           ▼
┌─────────────────────────┐
│   RECEPTION SACCH (TA)  │──── ET6
└─────────────────────────┘
           │
           ▼
┌─────────────────────────┐
│//// COMMUNICATION ///////│
└─────────────────────────┘
           │
           ▼                                non
        ◇ DEFAUT DE RECEPTION ◇─────────────┐
          SUR CHEMIN DE COURANT              │
                   │        ET7              │
                  oui                        │
                   ▼                         │
┌─────────────────────────────────────┐      │
│ RECEPTION/EMISSION SUIVANT L'AUTRE CHEMIN│── ET8
│ DE PROPAGATION EN FONCTION DE Δt ET TA│      │
└─────────────────────────────────────┘      │
           │                                 │
           └─────────────────────────────────┘
```

**RÉFÉRENCES CITÉES DANS LA DESCRIPTION**

**Documents brevets cités dans la description**

- EP 0504122 A
- US 5103459 A